# EUROPEAN PATENT SPECIFICATION

(11) **EP 4 425 065 B1**
(45) Date of publication and mention of the grant of the patent: **04.03.2026**
(21) Application number: 22885232.3
(22) Date of filing: 27.07.2022
(51) Int. Cl.: F24F 11/64, F24D 3/18, F24D 19/10, F24F 11/83, F24F 11/84, F24H 4/02, F24H 15/156, F24H 15/175, F24H 15/212, F24H 15/254, F24H 15/34, F24H 15/375, F24F 11/30, F24F 11/46

(54) **CONTROL METHOD FOR AIR SOURCE HEAT PUMP UNIT SYSTEM AND AIR SOURCE HEAT PUMP UNIT SYSTEM**
STEUERUNGSVERFAHREN FÜR EIN LUFTQUELLENWÄRMEPUMPENEINHEITSSYSTEM UND LUFTQUELLENWÄRMEPUMPENEINHEITSSYSTEM
PROCÉDÉ DE COMMANDE POUR UN SYSTÈME D'UNITÉ DE THERMOPOMPE À AIR ET SYSTÈME D'UNITÉ DE THERMOPOMPE À AIR

(30) Priority: 29.10.2021 CN 202111276386
(43) Date of publication of application: 04.09.2024
(73) Proprietor: Gree Electric Appliances, Inc. of Zhuhai, Zhuhai, Guangdong 519070 (CN)
(72) Inventor: LI, Hongbo, Zhuhai, Guangdong 519070 (CN); LI, Xiaomei, Zhuhai, Guangdong 519070 (CN); ZHANG, Rui, Zhuhai, Guangdong 519070 (CN); FENG, Jinling, Zhuhai, Guangdong 519070 (CN); YE, Changkuai, Zhuhai, Guangdong 519070 (CN); DU, Zhenlei, Zhuhai, Guangdong 519070 (CN)
(74) Representative: Murgitroyd & Company
(86) International application number: PCT/CN2022/108251
(87) International publication number: WO 2023/071331

(56) References cited:
- EP-B1- 3 364 116
- CN-A- 101 256 020
- CN-A- 105 222 219
- CN-A- 106 766 222
- CN-A- 106 989 477
- CN-A- 107 062 515
- CN-A- 107 062 515
- CN-A- 109 237 713
- CN-A- 109 237 713
- CN-A- 109 556 241
- CN-A- 114 001 442
- CN-A- 114 110 933
- JP-A- 2007 212 085

## Description

### TECHNICAL FIELD

The present application relates to the technical field of heat pump unit equipment, and in particular, to a control method for an air source heat pump unit system and an air source heat pump unit system.

### BACKGROUND

Currently, in distribution of various energy consumption of buildings, heating energy consumption accounts for a large proportion, which involves rational utilization of resources. It is necessary to increase utilization of renewable energy, such as air energy, to reduce environmental pollution. As a clean way of the utilization of energy, the air energy is utilized to improve indoor environment by heating and cooling. An air source heat pump unit system has a wide range of applications. However, in actual engineering projects, it is generally based on a maximum heat load under a designed working condition to select a unit type of the air source heat pump unit, which may cause low energy efficiency of the unit. When working condition of outdoor temperature is improved, a room load may be reduced, which may lead to frequent frosting, false defrosting, and unstable operation of the air source heat pump unit system. Correspondingly, these phenomena may easily cause fluctuations of water temperature of the unit system, high operating energy consumption of the unit system and poor room comfort.

That is, the air source heat pump unit system in related technologies has a problem of high operating energy consumption and poor room comfort.

CN 109237713 A discloses a control method and a control device for operation of a water-cooled multi-connected unit, a medium, and an air conditioning system of a water-cooled multi-connected unit. This method includes the following steps: acquiring environmental temperature data collected from an area where a terminal device is located; obtaining a load rate of an indoor unit of the water-cooled multi-connected unit according to the environmental temperature data, and obtaining a set outlet water temperature according to the load rate of the indoor unit; and controlling an outlet water temperature according to the set outlet water temperature. The load rate of the indoor unit of the water-cooled multi-connected unit is calculated according to the detected environmental temperature data of the area where the terminal device is located, and the set outlet water temperature is determined according to the load rate of the indoor unit to control the outlet water temperature, thereby realizing the coordinated control between the unit and the terminal device. Moreover, the water temperature is controlled according to the actual load, which reduces the energy waste. Therefore, an asynchronous problem caused by the independent control of the main machine and the terminal device of the traditional water chiller is solved, and the control reliability of the unit is improved.

CN 107062515 A discloses a control method for a water-cooled chiller, which includes the following steps: (1) detecting a temperature difference Yₘₐₓ between an inlet and an outlet of chilled water at a full load condition; (2) determining an initial value X of a target outlet temperature of the chilled water according to the temperature difference Yₘₐₓ between the inlet and the outlet of the chilled water at the full load condition, and taking the initial value x of the target outlet temperature of the chilled water as an initial parameter of the water-cooled chiller for performing control; (3) detecting an indoor demand load regularly, when the indoor demand load changes, measuring a temperature difference Y between the inlet and the outlet of the chilled water corresponding to the current indoor demand load; (4) calculating a new chilled water target outlet temperature X_{current}; and (5) performing control according to the new chilled water target outlet temperature X_{current}. According to the control method for the water-cooled chiller, when the indoor demand load decreases, the chilled water outlet temperature is reduced to counteract the decrease of temperature difference, thereby ensuring that the inlet water temperature is constant. The inlet water temperature directly reflects the perceived temperature, so it does not affect the comfort level.

CN 101256020 A discloses a method and a device for controlling a supply-return water temperature difference at the terminal of a central air conditioner. The method includes the following steps: receiving a measured water supply temperature signal value in a water supply pipeline and a water return temperature signal value in a water return pipeline; comparing a difference between the water return temperature signal value and the water supply temperature signal value with a temperature difference set value, and adjusting an opening degree of a proportional regulating valve disposed on the water return pipeline according to a comparison result and a preset condition; and when the difference is less than the temperature difference set value, according to the difference between a water return temperature and a water supply temperature and the temperature difference set value, the opening degree of the proportional control valve is reduced to reduce the water return flow. Therefore, after running for a period of time, the temperature difference between the water supply temperature and the water return temperature can be greater than or equal to the temperature difference set value. Consequently, on the premise that the temperature difference meets the set requirements, the control requirements of the room temperature according to the set value of the room temperature is met.

EP 3364116 A1 discloses a method for controlling a heat pump wherein a flow rate of a heat transport medium flowing into a first heat exchanger is measured, and if the measured flow rate changes below a predetermined smaller flow-threshold or above a predetermined upper flow-threshold, at least one control parameter in the formula of a control method to control a compressor operation frequency is changed.

### SUMMARY

In view of the problem in the prior art mentioned above, the present application proposes a control method for an air source heat pump unit system and an air source heat pump unit system to solve the problem of high operating energy consumption of the air source heat pump unit system and poor room comfort.

The control method for the air source heat pump unit system of the present application includes:
when a current temperature of a room is higher than a target temperature T of the room, controlling a supply water temperature of the air source heat pump unit system by monitoring a change in an actual demand at an end; specifically, the control method includes:
setting the target temperature of the room and a temperature deviation threshold;
setting a supply water temperature and a return water temperature of the air source heat pump unit system;
determining whether a current temperature deviation value of the room is higher than the temperature deviation threshold, where the current temperature deviation value of the room is a difference between a current temperature of the room and the target temperature of the room; and
reducing the supply water temperature while ensuring a temperature difference of supply and return water remaining unchanged when the current temperature deviation value of the room is high than the temperature deviation threshold;
where the temperature difference of supply and return water is a difference between the supply water temperature and the return water temperature, and the supply water temperature is higher than the return water temperature.

In an implementation, the method further includes:
determining whether the current temperature deviation value of the room is higher than the temperature deviation threshold; and
continually reducing the supply water temperature, synchronously reducing the return water temperature, and ensuring the temperature difference of supply and return water remaining unchanged when the current temperature deviation value of the room is higher than the temperature deviation threshold. In this implementation method, by adjusting an operating status of the air source heat pump unit system, an actual supply water temperature and an actual return water temperature of the air source heat pump unit system are reduced and the temperature difference of supply and return water of the air source heat pump unit system remains unchanged. Therefore, operating energy consumption of the air source heat pump unit system is reduced, an operating efficiency of the system is improved, energy waste of the system is reduced, and a stable operation of the system is ensured. Furthermore, room comfort is improved, so as to provide a better experience to a user.

In an implementation, the method further includes: returning to the step of reducing the supply water temperature while ensuring the temperature difference of supply and return water remaining unchanged when the current temperature deviation value of the room fails to be higher than the temperature deviation threshold.

In an implementation, the method further includes:
determining whether the current temperature deviation value of the room is higher than the temperature deviation threshold when the supply water temperature is lower than a lower limit temperature; and
adjusting an opening degree of an end valve and synchronously adjusting a rotary speed of a water pump to reduce a circulating water volume of the system when the current temperature deviation value of the room is higher than the temperature deviation threshold. In this implementation method, by adjusting the operating status of the air source heat pump unit system, the circulating water volume of the system is reduced. Therefore, the operating energy consumption of the air source heat pump unit system is reduced, the operating efficiency of the system is improved, the energy waste of the system is reduced, and the stable operation of the system is ensured. Furthermore, the room comfort is improved, so as to provide a better experience to the user.

In an implementation, the control method further includes:
determining whether the current temperature deviation value of the room is higher than the temperature deviation threshold when the rotary speed of the water pump is determined to reach a lower limit value; and
turning off the unit, and operating the water pump at a low frequency to maintain water circulation of the system. In this implementation method, by turning off the unit and reducing the rotary speed of the water pump, the operating energy consumption of the air source heat pump system is reduced, the operating efficiency of the system is improved, the energy waste of the system is reduced, and the stable operation of the system is ensured. Furthermore, the room comfort is improved, so as to provide a better experience to the user.

In an implementation, the method further includes: returning to the step of adjusting the opening degree of the end valve and synchronously adjusting the rotary speed of the water pump to reduce the circulating water volume of the system when the current temperature deviation value of the room fails to be higher than the temperature deviation threshold.

In an implementation, the control method further includes:
determining whether the temperature difference of supply and return water becomes smaller; and
turning off the water pump when the temperature difference of supply and return water becomes smaller.

In an implementation, the control method further includes:
determining whether the current temperature deviation value of the room is lower than the temperature deviation threshold; and
restarting the unit and the water pump when the current temperature deviation value of the room is lower than the temperature deviation threshold.

The present application provides an air source heat pump unit system. The air source heat pump unit system, configured to adjust a temperature of a room, includes:
a heat pump unit;
a water supply pipeline, where one end of the water supply pipeline is connected to an output of the heat pump unit;
an end heat exchanger, where an input of the end heat exchanger is connected to the other end of the water supply pipeline;
a return water pipeline, where one end of the return water pipeline is connected to an input of the heat pump unit, and the other end of the return water pipeline is connected to an output of the end heat exchanger;
a water pump, where the water pump is disposed on the water supply pipeline or the return water pipeline;
an end valve, where the end valve is disposed on the water supply pipeline; and
a controller, where the controller is configured to cooperate with the water pump and the end valve to control the air source heat pump unit system by implementing the steps of any one of the control methods for the air source heat pump unit system mentioned above.

The present application further provides a computer device, including a memory and a processor, the memory being configured to store a computer program. The processor is configured to execute the computer program to implement the steps of any one of the control methods for the air source heat pump unit system mentioned above.

The present application further provides a non-transitory computer-readable storage medium storing a computer program. When the computer program is executed, the steps of any one of the control methods for the air source heat pump unit system mentioned above are implemented.

Technical features mentioned above may be combined in various suitable ways or replaced by equivalent technical features, as long as a purpose of the present application may be achieved.

Compared with the prior art, the control method for the air source heat pump unit system and the air source heat pump unit system provided in the present application possess at least the following beneficial effects.
(1) By monitoring the change in the actual demand at the end, the operating status of the air source heat pump unit system is adjusted, thereby reducing the actual supply water temperature of the air source heat pump unit system. Therefore, the operating energy consumption of the air source heat pump unit system is reduced, the operating efficiency of the system is improved, the energy waste of the system is reduced, and the stable operation of the system is ensured. Furthermore, the room comfort is improved, so as to provide the better experience to the user.
(2) By adjusting the operating status of the air source heat pump unit system, the actual supply water temperature of the air source heat pump unit system is reduced, and the temperature difference of supply and return water of the air source heat pump unit system remains unchanged. Therefore, the operating energy consumption of the air source heat pump unit system is reduced, the operating efficiency of the system is improved, the energy waste of the system is reduced, the stable operation of the system is ensured. Furthermore, the room comfort is improved, so as to provide the better experience to the user.
(3) By monitoring a change of temperature in the room, a change of room load is predicted, and then the supply water temperature of the system, the return water temperature of the system, and the circulating water volume of the system are timely adjusted. Therefore, the operating efficiency of the system is improved, the energy waste of the system is reduced, and the stable operation of the system is ensured. Furthermore, the room comfort is improved, so as to provide the better experience to the user.

### BRIEF DESCRIPTION OF THE DRAWINGS

In the following a more detailed description of the present application will be provided based on embodiments and with reference to the accompanying drawings.
FIG. 1 shows a flowchart of a control method of Embodiment 1 of the present application;
FIG. 2 shows a flowchart of a control method of Embodiment 2 of the present application;
FIG. 3 shows a flowchart of a control method of Embodiment 3 of the present application;
FIG. 4 shows a flowchart of a control method of Embodiment 4 of the present application;
FIG. 5 shows a flowchart of a control method of Embodiment 5 of the present application;
FIG. 6 shows a flowchart of a control method of Embodiment 6 of the present application;
FIG. 7 shows a schematic structural diagram of an air source heat pump unit system of Embodiment 7 of the present application.

In the accompanying drawings, the same component is marked with the same reference numeral. The accompanying drawings fail to follow an actual scale.

### Reference numerals:

10. Heat pump unit; 20. Water supply pipeline; 30. End heat exchanger; 40. Return water pipeline; 50. Water pump; 60. End valve.

### DETAILED DESCRIPTION OF THE EMBODIMENTS

Explanation of the present application will be further provided with reference with accompanying drawings in the following.

It may be noted that in the present application, an end refers to a room heated by an air source heat pump unit system, and a change in an actual demand at the end in the present application includes a change of current temperature of the room mentioned above.

The present application provides a control method for an air source heat pump unit system, including:
controlling a supply water temperature of the air source heat pump unit system by monitoring a change in an actual demand at an end.

In the step mentioned above, by the monitoring the change in the actual demand at the end, an operating status of the air source heat pump unit system is adjusted, thereby reducing an actual supply water temperature of the air source heat pump unit system. Therefore, an operating energy consumption of the air source heat pump unit system is reduced, an operating efficiency of the system is improved, energy waste of the system is reduced, and a stable operation of the system is ensured. Furthermore, room comfort is improved, so as to provide a better experience to a user.

### Embodiment 1

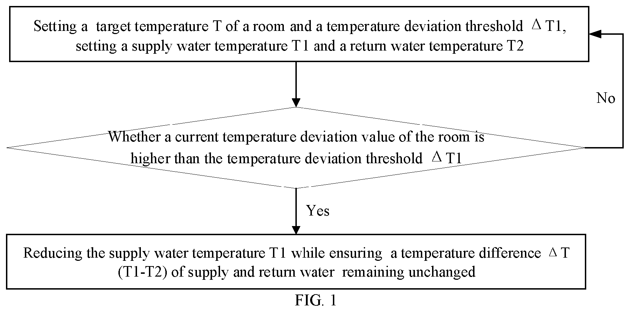

As shown in FIG. 1, the present application provides a control method for an air source heat pump unit system. The air source heat pump unit system is used to adjust a temperature of a room, and the control method for the air source heat pump unit system control method includes the following steps.
Step 1: setting a target temperature T of a room and a temperature deviation threshold ΔT1;
Step 2: setting a supply water temperature T1 and a return water temperature T2 of the air source heat pump unit system (Step 2 and Step 1 are combined together in FIG. 1, and there is no sequential relationship between the two steps);
Step 3: determining whether a current temperature deviation value of the room is higher than the temperature deviation threshold ΔT1. The current temperature deviation value of the room is a difference between a current temperature of the room and the target temperature of the room.

When the current temperature deviation value of the room is higher than the temperature deviation threshold ΔT1 (if yes), the supply water temperature T1 is reduced while a temperature difference ΔT of supply and return water is ensured remaining unchanged.

When the current temperature deviation value of the room fails to be higher than the temperature deviation threshold ΔT1 (if no), the step of setting the supply water temperature T1 and the return water temperature T2 of the air source heat pump unit system is returned.

The temperature difference ΔT of supply and return water of the air source heat pump unit system is a difference between the supply water temperature T1 and the return water temperature T2, and the supply water temperature T1 is higher than the return water temperature T2 in the air source heat pump unit system.

Base on the steps mentioned above, by adjusting an operating status of the air source heat pump unit system, an actual supply water temperature of the air source heat pump unit system is reduced, and the temperature difference of supply and return water of the air source heat pump unit system remains unchanged. Therefore, an operating energy consumption of the air source heat pump unit system is reduced, an operating efficiency of the system is improved, energy waste of the system is reduced, and a stable operation of the system is ensured. Furthermore, room comfort is improved, so as to provide a better experience to a user.

### Embodiment 2

A difference between Embodiment 2 and Embodiment 1 will be described below.

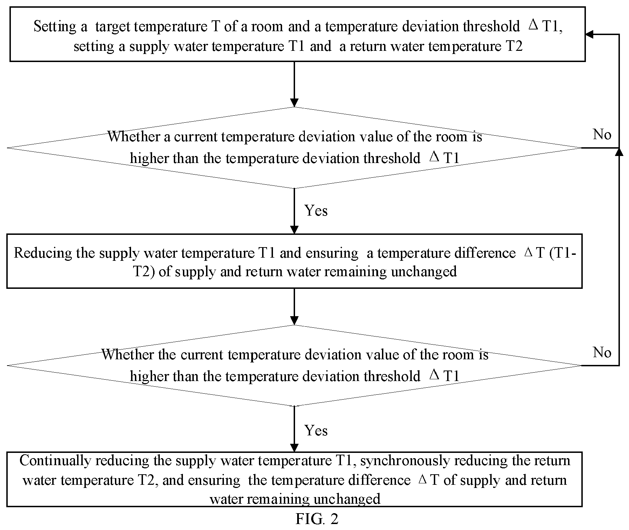

Specifically, as shown in FIG. 2, in an embodiment, the control method further includes the following step.

Step 4: determining whether the current temperature deviation value of the room is higher than the temperature deviation threshold ΔT1.

When the current temperature deviation value of the room is higher than the temperature deviation threshold Δ T1 (if yes), the supply water temperature T1 is continually reduced, the return water temperature T2 is synchronously reduced, and the temperature difference ΔT of supply and return water is ensured remaining unchanged.

When the current temperature deviation value of the room fails to be higher than the temperature deviation threshold ΔT1 (if not), the step of setting the supply water temperature T1 and the return water temperature T2 of the air source heat pump unit system is returned.

Base on the steps mentioned above, by adjusting an operating status of the air source heat pump unit system, an actual supply water temperature and an actual return water temperature of the air source heat pump unit system are reduced, and the temperature difference of supply and return water of the air source heat pump unit system remains unchanged. Therefore, an operating energy consumption of the air source heat pump unit system is reduced, an operating efficiency of the system is improved, energy waste of the system is reduced, and a stable operation of the system is ensured. Furthermore, room comfort is improved, so as to provide a better experience to a user.

The other steps in Embodiment 2 are the same as those in Embodiment 1, and will not be repeated here.

### Embodiment 3

A difference between Embodiment 3 and Embodiment 2 will be described below.

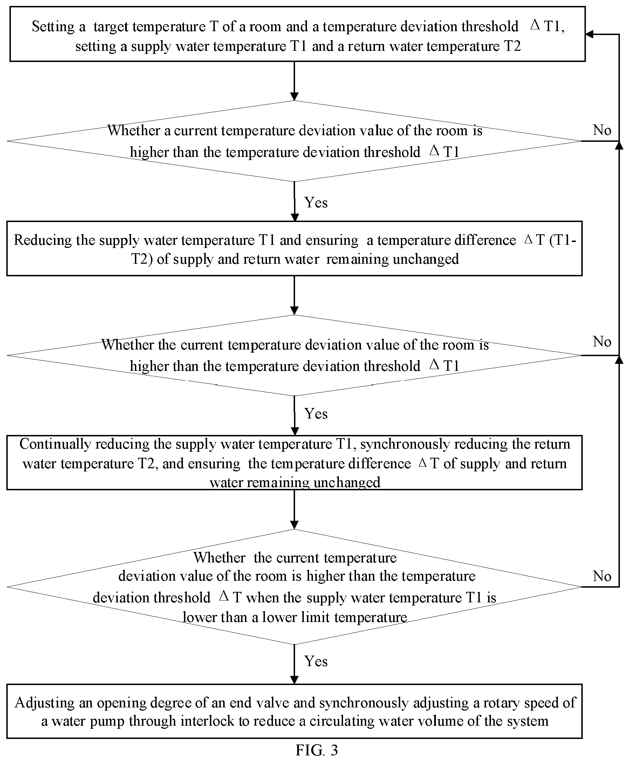

Specifically, as shown in FIG. 3, in an embodiment, the control method further includes the following step.

Step 5: determining whether the current temperature deviation value of the room is higher than the temperature deviation threshold ΔT1 when the supply water temperature T1 is lower than a lower limit temperature.

When the current temperature deviation value of the room is higher than the temperature deviation threshold ΔT1 (if yes), an opening degree of an end valve is adjusted, and a rotary speed of a water pump is synchronously adjusted through interlock to reduce a circulating water volume of the system.

When the current temperature deviation value of the room fails to be higher than the temperature deviation threshold ΔT1 (if not), the step of setting the supply water temperature T1 and the return water temperature T2 of the air source heat pump unit system is returned.

Base on the steps mentioned above, by adjusting an operating status of the air source heat pump unit system, the circulating water volume of the system is reduced. Therefor, an operating energy consumption of the air source heat pump unit system is reduced, an operating efficiency of the system is improved, energy waste of the system is reduced, and a stable operation of the system is ensured. Furthermore, room comfort is improved, so as to provide a better experience to a user.

It may be noted that the rotary speed of the water pump is synchronously adjusted through interlock in the present application refers to that the rotary speed of the water pump only can be adjusted when the opening degree of the end valve starts to be adjusted.

The other steps in Embodiment 3 are the same as those in Embodiment 2, and will not be repeated here.

### Embodiment 4

A difference between Embodiment 4 and Embodiment 3 will be described below.

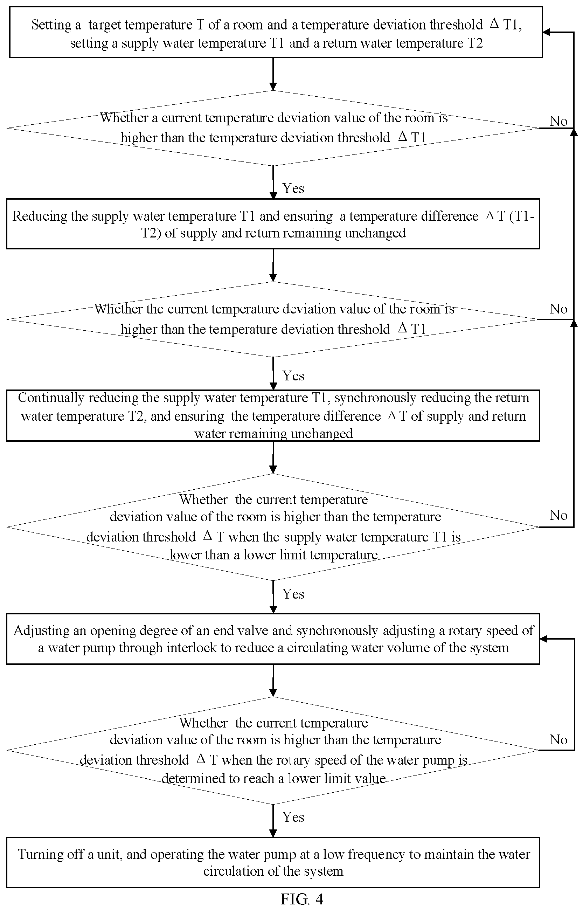

Specifically, as shown in FIG. 4, in an embodiment, the control method further includes the following step.

Step 6: determining whether the current temperature deviation value of the room is higher than the temperature deviation threshold ΔT1 when the rotary speed of the water pump is determined to reach a lower limit value.

When the current temperature deviation value of the room is higher than the temperature deviation threshold ΔT1 (if yes), a unit is turned off (that is, a heat pump unit is turned off), and the water pump is operated at a low frequency to maintain water circulation of the system.

When the current temperature deviation value of the room fails to be higher than the set temperature deviation threshold ΔT1 (if not), the step of adjusting the opening degree of the end valve and synchronously adjusting the rotary speed of the water pump through interlock to reduce the circulating water volume of the system is returned.

Base on the steps mentioned above, by turning off the unit and reducing the rotary speed of the water pump, an operating energy consumption of the air source heat pump unit system is reduced, an operating efficiency of the system is improved, energy waste of the system is reduced, and a stable operation of the system is ensured. Furthermore, room comfort is improved, so as to provide a better experience to a user.

The other steps in Embodiment 4 are the same as those in Embodiment 3, and will not be repeated here.

### Embodiment 5

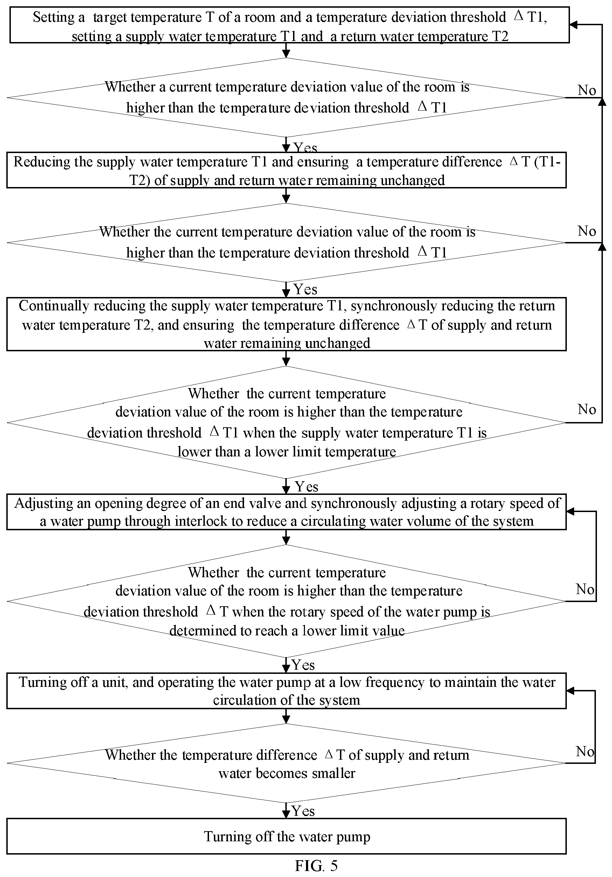

Specifically, as shown in FIG. 5, in an embodiment, the control method further includes the following step.

Step 7: determining whether the temperature difference ΔT of supply and return water becomes smaller.

When the temperature difference ΔT of supply and return water becomes smaller (if yes), the water pump is turned off.

When the temperature difference ΔT of supply and return water doesn't become smaller (if not), the step of turning off the unit and operating the water pump at the low frequency to maintain the circulating water volume of the system is returned.

The other steps in Embodiment 5 are the same as those in Embodiment 4, and will not be repeated here.

### Embodiment 6

A difference between Embodiment 6 and Embodiment 5 will be described below.

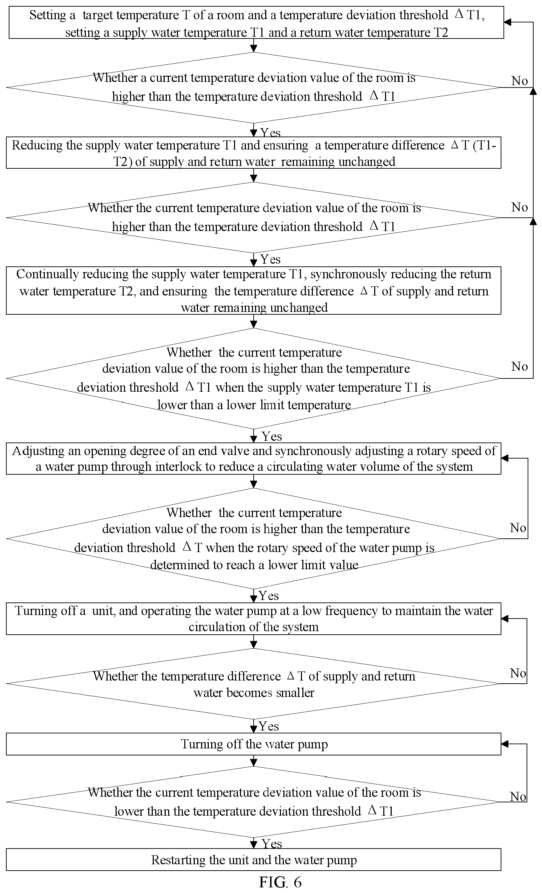

Specifically, as shown in FIG. 6, in an embodiment, the control method further includes the following step.

Step 8, determining whether the current temperature deviation value of the room is lower than the temperature deviation threshold ΔT1.

When the current temperature deviation value of the room is lower than the temperature deviation threshold ΔT1 (if yes), the unit and the water pump are restarted.

When the current temperature deviation value of the room is not lower than the temperature deviation threshold ΔT1 (if no), the step of turning off the water pump ois returned.

The other steps in Embodiment 6 are the same as those in Embodiment 5, and will not be repeated here.

### Embodiment 7

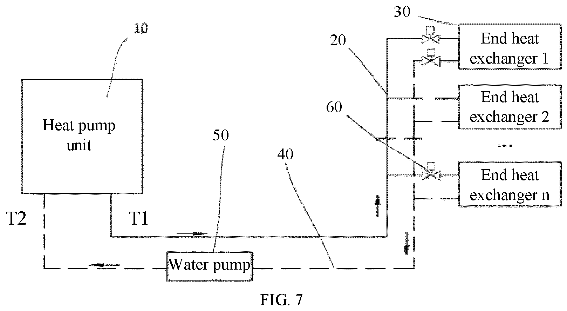

As shown in FIG. 7, the present application further provides an air source heat pump unit system. The air source heat pump unit system adopts the control method mentioned above to adjust a temperature of a room. The air source heat pump unit system includes a heat pump unit 10, a water supply pipeline 20, an end heat exchanger 30, a return water pipeline 40, a water pump 50, and an end valve 60. One end of the water supply pipeline 20 is connected to an output of the heat pump unit 10; an input of the end heat exchanger 30 is connected to the other end of the water supply pipeline 20; one end of the return water pipeline 40 is connected to the input of the heat pump unit 10; and the other end is connected to an output of the end heat exchanger 30. The water pump 50 is disposed on the return water pipeline 40, and the end valve 60 is disposed on the supply water pipeline 20. The water pump 50 cooperates with the end valve 60 to adjust a circulating water volume of the air source heat pump unit system. By adjusting a supply water temperature, a return water temperature, and the circulating water volume of the air source heat pump unit system, an operation efficiency of the air source heat pump unit system is improved.

In the configuration mentioned above, by monitoring a change of temperature in the room, a change of room load is predicted, and then the supply water temperature, the return water temperature of the system and the circulating water volume of the system are timely adjusted. Therefore, the operating efficiency of the system is improved, energy waste of the system is reduced, and a stable operation of the system is ensured. Furthermore, room comfort is improved, so as to provide a better experience to a user.

It may be noted that the heat pump unit 10 and the water pump 50 in the present application adopt variable frequency control. By monitoring the change of temperature in the room, the change of the room load is predicted, and then the supply water temperature of the system and the operating status of the water pump are timely adjusted. That is, the water temperature of the system is adjusted based on the change of the room load. Therefore, the operating efficiency of the system is improved, the energy waste of the system is reduced, and the stable operation of the system is ensured. Furthermore, the room comfort is improved.

It may be noted that during heating of the air source heat pump unit system in winter, output capacity of the unit may match the change of the room load at the end to avoid waste. For a conventional frequency conversion system, a unit is controlled by setting the supply water temperature. When temperature of the room reaches a set value, the unit may start and stop frequently. In the present application, the supply water temperature of the unit is controlled by monitoring a change in an actual demand at the end. Therefore, the problem in an application of the conventional frequency conversion system may be solved by adjusting the supply water temperature of the unit. For example, when the room load is reduced, by reducing the supply water temperature of the unit, the frequent start and stop phenomena caused by the change of the room load may be relieved. Therefore, system stability and comprehensive energy efficiency is improved. Meanwhile, when the room load continues to decrease, the circulating water volume of the system may be further reduced, thereby reducing an energy consumption of the water pump and reducing an energy consumption of the system.

In the following a more specific embodiment of the present application will be described.

The present application provides an air source heat pump unit system, including: a variable frequency air source heat pump unit, a variable frequency delivery water pump, an end heat exchanger 30, a circulating pipeline (including a return water pipeline 40 and a water supply pipeline 20), a temperature sensor, and an electric control valve (i.e., an end valve 60), etc.

During a heating process in winter, the variable frequency air source heat pump unit is used to absorb heat from air, increase the heat by driving the unit, and provide hot water at a suitable temperature to the end heat exchanger 30 for room heating.

Unit capacity adjustment process will be described below. A heating temperature of a room is set to a suitable target temperature value T (that is, temperature of the room is adjusted). At this time, a supply water temperature of the variable frequency air source heat pump unit is set to T1, and a return water temperature after room heat exchange changes to T2. A temperature difference of supply and return water of the variable frequency air source heat pump unit is ΔT (T1-T2). The delivery water pump is utilized to circulate hot water in a pipeline network. Due to correlation between an indoor heat load and various factors such as outdoor environment, personnel air conditioning usage habits, and a change in fresh air volume, when temperature of the outdoor environment changes, a room load will also change accordingly. When it is detected that a current temperature deviation value of the room is higher than a temperature deviation threshold ΔT1, and maintains for a certain time period t1, at this time, it is manifested as an increase in the return water temperature of the pipeline network. The variable frequency air source heat pump unit detects the return water temperature of the unit increases and maintains for a certain time period t1. At this time, by adjusting an operating status of the unit, an actual supply water temperature of the unit is reduced, and the temperature difference ΔT of supply and return water remains unchanged to reduce an operating energy consumption of the unit. If the current temperature deviation value of the room is still higher than the temperature deviation threshold ΔT1, the supply water temperature of the unit may still be reduced continuously. At this time, an adjustment method of the unit is to control a rotary speed of a compressor through frequency conversion, and synchronously reduce the return water temperature of the unit while maintaining the temperature difference Δ T of supply and return water unchanged. When the supply water temperature of the unit has reached a preset lower limit temperature and it is detected that the current temperature deviation value of the room is still higher than the temperature deviation threshold ΔT1 and the return water temperature of the unit is higher than a preset lower limit temperature, at this time, by adjusting an opening degree of a valve (i.e., an opening degree of an electric control valve) of the end heat exchanger 30 of the room, a flow rate of the hot water at the end heat exchang is reduced, and a rotary speed of the variable frequency delivery water pump is synchronously interlocked to reduce a circulating water volume of the system and an energy consumption of the variable frequency delivery water pump. When the rotary speed of the variable frequency delivery water pump reaches a lower limit value (that is, a rotary speed corresponds to a significant decrease of efficiency of the water pump), and maintains for a certain time period t3, and the current temperature deviation value of the room is still higher than the temperature deviation threshold ΔT1, at this time, the variable frequency air source heat pump unit is turned off, while the variable frequency delivery water pump continues to operate at a lowest allowable frequency to maintain water circulation of the system. When only the variable frequency delivery water pump is operated, and the temperature difference ΔT of supply and return water is detected to gradually decrease and maintain for a certain time period t4, then the variable frequency delivery water pump is turned off. When a main engine of the variable frequency air source heat pump unit and the variable frequency delivery water pump are turned off, and the current temperature deviation value of the room is detected to be lower than the temperature deviation threshold ΔT1 and maintain for a certain time period t5, the variable frequency delivery water pump and the variable frequency air source heat pump unit are restarted for heating. Meanwhile, during the adjustment process of the system, if the temperature of the room drops and falls below a lower limit of a preset room temperature deviation value, the unit frequency reduction control will be stopped, and an operating frequency of the unit will be appropriately increased to increase the temperature of the room. This loop control achieves an improvement in system efficiency.

It may be noted that the control method may improve an efficiency of the variable frequency air source heat pump unit, reduce frequent start and stop, reduce usage faults, and prolong a service life of the compressor by reducing the temperature of the supply water of hot water preferentially. Meanwhile, a frequency of fluctuation of the temperature of the room may be reduced, room comfort at the end may be maintained, and the waste of room heat may be reduced. In addition, by adjusting a flow rate of the system through the variable frequency delivery water pump, the energy consumption of the water pump may be reduced, and a comprehensive operating efficiency of the system may be improved.

The air source heat pump unit system and the control method therefor in the present application have the following advantages.
1. The comprehensive energy efficiency of the system is improved and an operating cost is reduced.
2. Operating efficiency of the unit is improved and power consumption of the unit is reduced.
3. Energy consumption of delivery equipment is reduced and the power consumption of the system is reduced.
4. Load adjustment range of the system is enlarged and ineffective energy waste is reduced.

In an embodiment, the present application further provides a computer device, including a memory and a processor, the memory being configured to store a computer program. The processor is configured to execute the computer program to implement the steps of any one of the control methods for the air source heat pump unit system mentioned above.

In an embodiment, the present application further provides a non-transitory computer-readable storage medium storing a computer program. The computer program is executed by a processor to implement the steps of any one of the control methods for the air source heat pump unit system mentioned above.

Those skilled in the art can understand and implement all or part of the processes in the embodiments mentioned above, which may be implemented by instructing a relevant hardware through computer programs. The computer program may be stored in a non-transitory computer-readable storage medium, and when the computer programs are executed, processes in the embodiments of the method mentioned above may be included. Therein, any reference to memory, storage, database, or other media used in the embodiments provided in the present application may include at least one of non-volatile and volatile memory. The non-volatile memory may include a Read-Only Memory (ROM), a magnetic tape, a floppy disk, a flash memory, or an optical memory. The volatile memory may include a Random Access Memory (RAM) or an external cache memory. As an explanation rather than limitation, RAM may include various forms, such as a Static Random Access Memory (SRAM) or a Dynamic Random Access Memory (DRAM).

In the description of this application, it should be understood that the terms "up", "down", "bottom", "top", "front", "back", "inside", "outside", "left", "right", etc. indicate that the orientation or position relationship based on the orientation or position relationship shown in the accompanying drawings is only for the convenience of describing the present application and simplifying the description, and not to indicate or imply that the device or component referred to must have a specific orientation, or be constructed and operated in a specific orientation, which cannot be understood as a limitation on this application accordingly.

Although specific embodiments have been referred to in the specification to describe the present application, it should be understood that these embodiments are only examples of the principles and applications of the present application. Therefore, it should be understood that many modifications may be made to exemplary embodiments, and other arrangements may be designed as long as they do not deviate from the scope of the present application as defined by the attached claims. It should be understood that different dependent claims and the features described in the specification can be combined in a way different from the original claims. It can also be understood that the features described in a single embodiment may be used in other embodiments.

## Claims

1. A control method for an air source heat pump unit system, comprising:
when a current temperature of a room is higher than a target temperature (T) of the room, controlling a supply water temperature of the air source heat pump unit system by monitoring a change in an actual demand at an end; specifically, the control method comprising:
setting the target temperature (T) of the room and a temperature deviation threshold (ΔT1); and
setting a supply water temperature (T1) and a return water temperature (T2) of the air source heat pump unit system; **characterized by**
determining whether a current temperature deviation value of the room is higher than the temperature deviation threshold (ΔT1), wherein the current temperature deviation value of the room is a difference between a current temperature of the room and the target temperature (T) of the room; and
reducing the supply water temperature (T1) while ensuring a temperature difference (ΔT) of supply and return water remaining unchanged when the current temperature deviation value of the room is higher than the temperature deviation threshold (ΔT1);
wherein the temperature difference (ΔT) of supply and return water is a difference between the supply water temperature (T1) and the return water temperature (T2), and the supply water temperature (T1) is higher than the return water temperature (T2).

2. The control method for the air source heat pump unit system according to claim 1, further comprising:
determining whether the current temperature deviation value of the room is higher than the temperature deviation threshold (ΔT1); and
continually reducing the supply water temperature (T1), synchronously reducing the return water temperature (T2), and ensuring the temperature difference (ΔT) of supply and return water remaining unchanged when the current temperature deviation value of the room is higher than the temperature deviation threshold (ΔT1).

3. The control method for the air source heat pump unit system according to claim 2, further comprising:
returning to the step of setting the supply water temperature (T1) and the return water temperature (T2) of the air source heat pump unit system when the current temperature deviation value of the room fails to be higher than the temperature deviation threshold (ΔT1).

4. The control method for the air source heat pump unit system according to claim 2 or claim 3, further comprising:
determining whether the current temperature deviation value of the room is higher than the temperature deviation threshold (ΔT1) when the supply water temperature (T1) is lower than a lower limit temperature; and
adjusting an opening degree of an end valve and synchronously adjusting a rotary speed of a water pump to reduce a circulating water volume of the system when the current temperature deviation value of the room is higher than the temperature deviation threshold (ΔT1).

5. The control method for the air source heat pump unit system according to claim 4, further comprising:
determining whether the current temperature deviation value of the room is higher than the temperature deviation threshold (ΔT1) when the rotary speed of the water pump is determined to reach a lower limit value; and
turning off the unit, and operating the water pump at a low frequency to maintain water circulation of the system, when the the current temperature deviation value of the room is higher than the temperature deviation threshold (ΔT1).

6. The control method of the air source heat pump unit system according to claim 5, further comprising:
returning to the step of adjusting the opening degree of the end valve and synchronously adjusting the rotary speed of the water pump to reduce the circulating water volume of the system when the current temperature deviation value of the room fails to be higher than the temperature deviation threshold (ΔT1).

7. The control method of the air source heat pump unit system according to claim 5 or claim 6, further comprising:
determining whether the temperature difference (ΔT) of supply and return water becomes smaller; and
turning off the water pump when the temperature difference (ΔT) of supply and return water becomes smaller.

8. The control method of the air source heat pump unit system according to claim 7, further comprising:
determining whether the current temperature deviation value of the room is lower than the temperature deviation threshold (ΔT1); and
restarting the unit and the water pump when the current temperature deviation value of the room is lower than the temperature deviation threshold (ΔT1).

9. An air source heat pump unit system, being configured to adjust a temperature of a room, comprising:
a heat pump unit (10);
a water supply pipeline (20), wherein one end of the water supply pipeline (20) is connected to an output of the heat pump unit (10);
an end heat exchanger (30), wherein an input of the end heat exchanger (30) is connected to the other end of the water supply pipeline (20);
a return water pipeline (40), wherein one end of the return water pipeline (40) is connected to an input of the heat pump unit (10), and the other end of the return water pipeline (40) is connected to an output of the end heat exchanger (30);
a water pump (50), wherein the water pump (50) is disposed on the water supply pipeline (20) or the return water pipeline (40);
an end valve (60), wherein the end valve (60) is disposed on the water supply pipeline (20); and
a controller, **characterized by** the controller is configured to cooperate with the water pump (50) and the end valve (60) to control the air source heat pump unit system by implementing the steps of the method according to any one of claims 1 to 8.

10. A computer device, comprising:
a memory and a processor, the memory being configured to store a computer program; and
**characterized in that**, the processor is configured to execute the computer program to implement the steps of the method according to any one of claims 1 to 8.

11. A non-transitory computer-readable storage medium, storing a computer program, implementing the steps of the method according to any one of claims 1 to 8 when the computer program is executed.

## Patentansprüche

1. Ein Steuerungsverfahren für ein Luftquellen-Wärmepumpeneinheit-System, das Folgendes beinhaltet:
wenn eine aktuelle Temperatur eines Raums höher als eine Zieltemperatur (T) des Raums ist, Steuern einer Zufuhrwassertemperatur des Luftquellen-Wärmepumpeneinheit-Systems durch Überwachen einer Änderung eines tatsächlichen Bedarfs an einem Ende; wobei das Steuerungsverfahren insbesondere Folgendes beinhaltet:
Einstellen der Zieltemperatur (T) des Raums und eines
Temperaturabweichungsschwellenwerts (ΔT1); und
Einstellen einer Zufuhrwassertemperatur (T1) und einer Rücklaufwassertemperatur (T2) des Luftquellen-Wärmepumpeneinheit-Systems; **gekennzeichnet durch** Bestimmen, ob ein aktueller Temperaturabweichungswert des Raums höher als der Temperaturabweichungsschwellenwert (ΔT1) ist, wobei der aktuelle Temperaturabweichungswert des Raums eine Differenz zwischen einer aktuellen Temperatur des Raums und der Zieltemperatur (T) des Raums ist; und
Reduzieren der Zufuhrwassertemperatur (T1), während sichergestellt wird, dass eine Temperaturdifferenz (ΔT) von Zufuhrwasser und Rücklaufwasser unverändert bleibt, wenn der aktuelle Temperaturabweichungswert des Raums höher als der Temperaturabweichungsschwellenwert (ΔT1) ist;
wobei die Temperaturdifferenz (ΔT) von Zufuhrwasser und Rücklaufwasser eine Differenz zwischen der Zufuhrwassertemperatur (T1) und der
Rücklaufwassertemperatur (T2) ist und die Zufuhrwassertemperatur (T1) höher als die Rücklaufwassertemperatur (T2) ist.

2. Steuerungsverfahren für das Luftquellen-Wärmepumpeneinheit-System gemäß Anspruch 1, das ferner Folgendes beinhaltet:
Bestimmen, ob der aktuelle Temperaturabweichungswert des Raums höher als der Temperaturabweichungsschwellenwert (ΔT1) ist; und
kontinuierliches Reduzieren der Zufuhrwassertemperatur (T1), synchrones Reduzieren der Rücklaufwassertemperatur (T2) und Sicherstellen, dass die Temperaturdifferenz (ΔT) von Zufuhrwasser und Rücklaufwasser unverändert bleibt, wenn der aktuelle Temperaturabweichungswert des Raums höher als der
Temperaturabweichungsschwellenwert (ΔT1) ist.

3. Steuerungsverfahren für das Luftquellen-Wärmepumpeneinheit-System gemäß Anspruch 2, das ferner Folgendes beinhaltet:
Zurückkehren zu dem Schritt des Einstellens der Zufuhrwassertemperatur (T1) und der Rücklaufwassertemperatur (T2) des Luftquellen-Wärmepumpeneinheit-Systems, wenn der aktuelle Temperaturabweichungswert des Raums nicht höher als der Temperaturabweichungsschwellenwert (ΔT1) ist.

4. Steuerungsverfahren für das Luftquellen-Wärmepumpeneinheit-System gemäß Anspruch 2 oder Anspruch 3, das ferner Folgendes beinhaltet:
Bestimmen, ob der aktuelle Temperaturabweichungswert des Raums höher als der Temperaturabweichungsschwellenwert (ΔT1) ist, wenn die Zufuhrwassertemperatur (T1) niedriger als eine niedrige Grenztemperatur ist; und
Einstellen eines Öffnungsgrads eines Endventils und synchrones Einstellen einer Drehzahl einer Wasserpumpe, um ein zirkulierendes Wasservolumen des Systems zu reduzieren, wenn der aktuelle Temperaturabweichungswert des Raums höher als der Temperaturabweichungsschwellenwert (ΔT1) ist.

5. Steuerungsverfahren für das Luftquellen-Wärmepumpeneinheit-System gemäß Anspruch 4, das ferner Folgendes beinhaltet:
Bestimmen, ob der aktuelle Temperaturabweichungswert des Raums höher als der Temperaturabweichungsschwellenwert (ΔT1) ist, wenn bestimmt wird, dass die Drehzahl der Wasserpumpe einen niedrigen Grenzwert erreicht; und
Abschalten der Einheit und Betreiben der Wasserpumpe mit einer niedrigen Frequenz, um die Wasserzirkulation des Systems aufrechtzuerhalten, wenn der aktuelle Temperaturabweichungswert des Raums höher als der Temperaturabweichungsschwellenwert (ΔT1) ist.

6. Steuerungsverfahren für das Luftquellen-Wärmepumpeneinheit-System gemäß Anspruch 5, das ferner Folgendes beinhaltet:
Zurückkehren zu dem Schritt des Einstellens des Öffnungsgrads des Endventils und des synchronen Einstellens der Drehzahl der Wasserpumpe, um das zirkulierende Wasservolumen des Systems zu reduzieren, wenn der aktuelle Temperaturabweichungswert des Raums nicht höher als der Temperaturabweichungsschwellenwert (ΔT1) ist.

7. Steuerungsverfahren für das Luftquellen-Wärmepumpeneinheit-System gemäß Anspruch 5 oder Anspruch 6, das ferner Folgendes beinhaltet:
Bestimmen, ob die Temperaturdifferenz (ΔT) von Zufuhrwasser und Rücklaufwasser kleiner wird; und
Abschalten der Wasserpumpe, wenn die Temperaturdifferenz (ΔT) von Zufuhrwasser und Rücklaufwasser kleiner wird.

8. Steuerungsverfahren für das Luftquellen-Wärmepumpeneinheit-System gemäß Anspruch 7, das ferner Folgendes beinhaltet:
Bestimmen, ob der aktuelle Temperaturabweichungswert des Raums niedriger als der Temperaturabweichungsschwellenwert (ΔT1) ist; und
Neustarten der Einheit und der Wasserpumpe, wenn der aktuelle Temperaturabweichungswert des Raums niedriger als der
Temperaturabweichungsschwellenwert (ΔT1) ist.

9. Ein Luftquellen-Wärmepumpeneinheit-System, das konfiguriert ist, um eine Temperatur eines Raums einzustellen, das Folgendes beinhaltet:
eine Wärmepumpeneinheit (10);
eine Wasserzufuhrleitung (20), wobei ein Ende der Wasserzufuhrleitung (20) mit einem Ausgang der Wärmepumpeneinheit (10) verbunden ist;
einen Endwärmetauscher (30), wobei ein Eingang des Endwärmetauschers (30) mit dem anderen Ende der Wasserzufuhrleitung (20) verbunden ist;
eine Rücklaufwasserleitung (40), wobei ein Ende der Rücklaufwasserleitung (40) mit einem Eingang der Wärmepumpeneinheit (10) verbunden ist und das andere Ende der Rücklaufwasserleitung (40) mit einem Ausgang des Endwärmetauschers (30) verbunden ist;
eine Wasserpumpe (50), wobei die Wasserpumpe (50) an der Wasserzufuhrleitung (20) oder der Rücklaufwasserleitung (40) angeordnet ist;
ein Endventil (60), wobei das Endventil (60) an der Wasserzufuhrleitung (20) angeordnet ist; und
eine Steuerung, **dadurch gekennzeichnet, dass** die Steuerung konfiguriert ist, um mit der Wasserpumpe (50) und dem Endventil (60) zusammenzuwirken, um das Luftquellen-Wärmepumpeneinheit-System durch Implementieren der Schritte des Verfahrens gemäß einem der Ansprüche 1 bis 8 zu steuern.

10. Eine Computervorrichtung, die Folgendes beinhaltet:
einen Speicher und einen Prozessor, wobei der Speicher konfiguriert ist, um ein Computerprogramm zu speichern; und
**dadurch gekennzeichnet, dass** der Prozessor konfiguriert ist, um das Computerprogramm auszuführen, um die Schritte des Verfahrens gemäß einem der Ansprüche 1 bis 8 zu implementieren.

11. Ein nicht transitorisches computerlesbares Speichermedium, das ein Computerprogramm speichert, das die Schritte des Verfahrens gemäß einem der Ansprüche 1 bis 8 implementiert, wenn das Computerprogramm ausgeführt wird.

## Revendications

1. Un procédé de commande pour un système d'unité de thermopompe à air, comprenant :
lorsqu'une température en cours d'une pièce est supérieure à une température cible (T) de la pièce, la commande d'une température d'eau de distribution du système d'unité de thermopompe à air en surveillant un changement dans une demande réelle au niveau d'une extrémité ; spécifiquement, le procédé de commande comprenant :
le réglage de la température cible (T) de la pièce et d'un seuil d'écart de température (ΔT1) ; et
le réglage d'une température d'eau de distribution (T1) et d'une température d'eau de retour (T2) du système d'unité de thermopompe à air ; **caractérisé par** la détermination si une valeur d'écart de température en cours de la pièce est supérieure au seuil d'écart de température (ΔT1), la valeur d'écart de température en cours de la pièce étant une différence entre une température en cours de la pièce et la température cible (T) de la pièce ; et
la réduction de la température d'eau de distribution (T1) tout en s'assurant qu'une différence de température (ΔT) d'eau de distribution et de retour reste inchangée lorsque la valeur d'écart de température en cours de la pièce est supérieure au seuil d'écart de température (ΔT1) ;
dans lequel la différence de température (ΔT) d'eau de distribution et de retour est une différence entre la température d'eau de distribution (T1) et la température d'eau de retour (T2), et la température d'eau de distribution (T1) est supérieure à la température d'eau de retour (T2).

2. Le procédé de commande pour le système d'unité de thermopompe à air selon la revendication 1, comprenant en outre :
la détermination si la valeur d'écart de température en cours de la pièce est supérieure au seuil d'écart de température (ΔT1) ; et
la réduction continue de la température d'eau de distribution (T1), la réduction synchrone de la température d'eau de retour (T2), et le fait de s'assurer que la différence de température (ΔT) d'eau de distribution et de retour reste inchangée lorsque la valeur d'écart de température en cours de la pièce est supérieure au seuil d'écart de température (ΔT1).

3. Le procédé de commande pour le système d'unité de thermopompe à air selon la revendication 2, comprenant en outre :
le retour à l'étape de réglage de la température d'eau de distribution (T1) et de la température d'eau de retour (T2) du système d'unité de thermopompe à air lorsque la valeur d'écart de température en cours de la pièce ne parvient pas à être supérieure au seuil d'écart de température (ΔT1).

4. Le procédé de commande pour le système d'unité de thermopompe à air selon la revendication 2 ou la revendication 3, comprenant en outre :
la détermination si la valeur d'écart de température en cours de la pièce est supérieure au seuil d'écart de température (ΔT1) lorsque la température d'eau de distribution (T1) est inférieure à une température limite inférieure ; et
l'ajustement d'un degré d'ouverture d'une soupape d'extrémité et l'ajustement synchrone d'une vitesse de rotation d'une pompe à eau pour réduire un volume d'eau de circulation du système lorsque la valeur d'écart de température en cours de la pièce est supérieure au seuil d'écart de température (ΔT1).

5. Le procédé de commande pour le système d'unité de thermopompe à air selon la revendication 4, comprenant en outre :
la détermination si la valeur d'écart de température en cours de la pièce est supérieure au seuil d'écart de température (ΔT1) lorsqu'il est déterminé que la vitesse de rotation de la pompe à eau a atteint une valeur limite inférieure ; et
l'arrêt de l'unité, et la mise en fonctionnement de la pompe à eau à une basse fréquence pour maintenir la circulation d'eau du système, lorsque la valeur d'écart de température en cours de la pièce est supérieure au seuil d'écart de température (ΔT1).

6. Le procédé de commande du système d'unité de thermopompe à air selon la revendication 5, comprenant en outre :
le retour à l'étape d'ajustement du degré d'ouverture de la soupape d'extrémité et
l'ajustement synchrone de la vitesse de rotation de la pompe à eau pour réduire le volume d'eau de circulation du système lorsque la valeur d'écart de température en cours de la pièce ne parvient pas à être supérieure au seuil d'écart de température (ΔT1).

7. Le procédé de commande du système d'unité de thermopompe à air selon la revendication 5 ou la revendication 6, comprenant en outre :
la détermination si la différence de température (ΔT) d'eau de distribution et de retour devient plus petite ; et
l'arrêt de la pompe à eau lorsque la différence de température (ΔT) d'eau de distribution et de retour devient plus petite.

8. Le procédé de commande du système d'unité de thermopompe à air selon la revendication 7, comprenant en outre :
la détermination si la valeur d'écart de température en cours de la pièce est inférieure au seuil d'écart de température (ΔT1) ; et
le redémarrage de l'unité et de la pompe à eau lorsque la valeur d'écart de température en cours de la pièce est inférieure au seuil d'écart de température (ΔT1).

9. Un système d'unité de thermopompe à air, qui est configuré pour ajuster une température d'une pièce, comprenant :
une unité de thermopompe (10) ;
une conduite de distribution d'eau (20), une extrémité de la conduite de distribution d'eau (20) étant raccordée à une sortie de l'unité de thermopompe (10) ;
un échangeur de chaleur d'extrémité (30), une entrée de l'échangeur de chaleur d'extrémité (30) étant raccordée à l'autre extrémité de la conduite de distribution d'eau (20) ;
une conduite d'eau de retour (40), une extrémité de la conduite d'eau de retour (40) étant raccordée à une entrée de l'unité de thermopompe (10), et l'autre extrémité de la conduite d'eau de retour (40) étant raccordée à une sortie de l'échangeur de chaleur d'extrémité (30) ;
une pompe à eau (50), la pompe à eau (50) étant disposée sur la conduite de distribution d'eau (20) ou la conduite d'eau de retour (40) ;
une soupape d'extrémité (60), la soupape d'extrémité (60) étant disposée sur la conduite de distribution d'eau (20) ; et
un dispositif de commande, **caractérisé en ce que** le dispositif de commande est configuré pour coopérer avec la pompe à eau (50) et la soupape d'extrémité (60) pour commander le système d'unité de thermopompe à air en mettant en oeuvre les étapes du procédé selon l'une quelconque des revendications 1 à 8.

10. Un dispositif informatique, comprenant :
une mémoire et un processeur, la mémoire étant configurée pour stocker un programme informatique ; et
**caractérisé en ce que** le processeur est configuré pour exécuter le programme informatique pour mettre en œuvre les étapes du procédé selon l'une quelconque des revendications 1 à 8.

11. Un support de stockage non transitoire lisible par ordinateur, stockant un programme informatique, mettant en oeuvre les étapes du procédé selon l'une quelconque des revendications 1 à 8 lorsque le programme informatique est exécuté.
